# EUROPÄISCHE PATENTSCHRIFT

(11) **EP 2 213 980 B1**
(45) Veröffentlichungstag und Bekanntmachung des Hinweises auf die Patenterteilung: **20.03.2013**
(21) Anmeldenummer: 09015919.5
(22) Anmeldetag: 23.12.2009
(51) Int. Cl.: G01C 21/32, G08G 1/09, G06K 9/00

(54) **Verfahren zum Betrieb einer Navigationseinrichtung eines Kraftfahrzeugs sowie Kraftfahrzeug hierfür**
Method for operating a navigation device of a motor vehicle and motor vehicle for same
Procédé de fonctionnement d'un dispositif de navigation d'un véhicule automobile et véhicule automobile correspondant

(30) Priorität: 28.01.2009 DE 102009006471
(43) Veröffentlichungstag der Anmeldung: 04.08.2010
(73) Patentinhaber: Audi AG, 85045 Ingolstadt (DE)
(72) Erfinder: Giesler, Björn, 85055 Ingolstadt (DE); Schönherr, Kristin, 85057 Ingolstadt (DE)
(74) Vertreter: Thielmann, Frank

(56) Entgegenhaltungen:
- EP-A1- 1 491 978
- EP-A1- 1 860 628
- WO-A1-2008/009965
- US-A1- 2008 240 513

## Beschreibung

Die Erfindung betrifft ein Verfahren zum Betrieb einer Navigationseinrichtung eines Kraftfahrzeugs, wobei die Navigationseinrichtung die Position und/oder die Fahrroute des Kraftfahrzeugs mit Hilfe von kraftfahrzeugseitig vorhandenen geographischen Basisdaten bestimmt, wobei aus den Sensordaten wenigstens einer kraftfahrzeugseitig vorhandenen Sensoreinrichtung wenigstens eine geographische Information zu einem Bereich der Kraftfahrzeugumgebung ermittelt, in einer Speichereinrichtung als zusätzliches geographisches Datum gespeichert und zur Ergänzung und/oder Aktualisierung der geographischen Basisdaten.

Zur Positionsbestimmung in einem Kraftfahrzeug gibt es bekanntermaßen Vorrichtungen, die zur Kommunikation mit Satelliten des Global Positioning Systems, auch GPS genannt, ausgebildet sind. Um aus den mittels der Kommunikation mit den Satelliten erhaltenen Informationen eine Positionsbestimmung und auch eine Fahrroutenberechnung durchführen zu können, werden kraftfahrzeugseitig geographische Basisdaten vorgehalten. Diese sind zur Vereinfachung der Aktualisierung der geographischen Basisdaten typischerweise auf einer CD oder DVD gespeichert, wobei zur Aktualisierung der geographischen Basisdaten dann lediglich die CD oder die DVD ausgewechselt wird. Derartige Datenträger werden höchstens wenige Male im Jahr überarbeitet, allerdings kann nicht jede Veränderung zeitnah erfasst werden. Insbesondere zeitlich begrenzte Objekte wie Baustellen können und sollen dabei nicht in die geographischen Basisdaten auf dem Datenträger einfließen.

Weiterhin ist es bekannt, Stauinformationen drahtlos an die Navigationseinrichtung zu übertragen, um so die Fahrroutenplanung an bekanntgewordene

Hindernisse anzupassen. Dies erfordert zum einen, dass eine Staumeldung in irgendeiner Art und Weise an der die Information weiterleitenden Stelle bereits eingegangen ist, andererseits wird bei derartigen Informationen keine genaue Aussage über die wahrscheinliche Verzögerung aufgrund des Staus getroffen. Weiterhin sind die Stauinformationen aufgrund der Vorgehensweise grundsätzlich mit einem Zeitverlust behaftet und können daher veraltet sein.

In EP 1 860 628 A1 ist eine kraftfahrzeugseitige Vorrichtung zum Generieren einer digitalen Landschaftskarte beschrieben. Beim Erfassen der digitalen Landschaftskarte bestimmt eine Navigationseinrichtung die Position und/oder die Fahrroute des Kraftfahrzeugs mit Hilfe von kraftfahrzeugseitig vorhandenen geografischen Basisdaten. Aus den mittels einer Sensoreinrichtung erfassten Sensordaten wird wenigstens eine geografische Information zu einem Bereich der Kraftfahrzeugumgebung ermittelt. Diese geografischen Informationen können in einer Speichereinrichtung abgespeichert werden und zur Ergänzung der geografischen Basisdaten verwendet werden.

WO 2008/009965 A1 offenbart eine Methode zur Erstellung einer Karte und einem Parkassistenzsystem, das eine solche Karte generiert. Insbesondere ist vorgesehen, genaue Karten von gefährlichen Kreuzungen und Parkplätzen zu erstellen. Das Verfahren beinhaltet die kraftfahrzeugseitige Erfassung von Bildern, in denen insbesondere sichtbare Kanten bestimmt werden. Die bilderfassende Sensoreinrichtung kann insbesondere als Videokamera ausgebildet sein, die sichtbare Landmarken, mithin also zum Bereich der Kraftfahrzeugumgebung gehörende geografische Informationen, erfasst. Dabei wird zumindest eine Ausgangsposition des Kraftfahrzeugs mittels eines GPS-Sensors bestimmt. Die während der Fahrt generierte Karte wird in einer Speichereinrichtung als zusätzliche geografische Daten gespeichert und entsprechend zur Ergänzung der geografischen Basisdaten verwendet.

US 2008/0240513 A1 beschreibt eine Vorrichtung und ein Verfahren zur Aktualisierung von Kartendaten, wobei die Position eines Kraftfahrzeugs anhand von geografischen Basisdaten und mittels einer Navigationseinrichtung bestimmt wird. Dabei werden Videobilder von Kameras aufgenommen und als zusätzliche Daten in einem tragbaren Computer abgespeichert.

In EP 1 491 978 A1 ist ein Kollisionsobjekt-Erkennungssystem offenbart, das in einem Kraftfahrzeug eingesetzt werden kann. Das Kollisionsobjekt-Erkennungssystem umfasst eine Kamera zur Aufnahme eines Bildsignals der Kraftfahrzeugumgebung. Insbesondere ist vorgesehen, dynamische Objekte zu erfassen. Ferner wird bei der Erfassung eine Uhrzeit berücksichtigt, da vorgesehen ist, erfasste Fußgänger tagsüber nicht als Kollisionsobjekte zu identifizieren.

Es ist daher Aufgabe der vorliegenden Erfindung, ein Verfahren anzugeben, mit dem eine verbesserte Positionsbestimmung und eine genauere Fahrroutenplanung ermöglicht wird.

Zur Lösung ist bei einem Verfahren der eingangs genannten Art vorgesehen, dass aus den Sensordaten als geographische Information wenigstens eine Information über ein dynamisches Objekt in Abhängigkeit einer Uhrzeit und/oder eines Datums ermittelt wird.

Mit Hilfe des erfindungsgemäßen Verfahrens aktualisiert und ergänzt das Kraftfahrzeug die von einer externen Datenquelle übergebenen geographischen Basisdaten selbstständig unter Zuhilfenahme von Sensordaten einer kraftfahrzeugseitig vorhandenen Sensoreinrichtung. Die geographischen Daten, also die geographischen Basisdaten und die zusätzlichen geographischen Daten, auf die das Kraftfahrzeug zurückgreifen kann, sind dementsprechend hochaktuell. Durch die kraftfahrzeugseitige Speicherung stehen sie auch nach einem Wechsel der geographischen Basisdaten in Form eines Austauschs einer diese enthaltenden CD oder DVD dem Kraftfahrzeug und damit dem Fahrer weiterhin zur Verfügung.

Mit besonderem Vorteil kann als Sensoreinrichtung eine Bildaufnahmeeinrichtung zur Aufnahme von Bilddaten als Sensordaten verwendet werden. Daneben ist aber auch die Verwendung von Radarsensoren, sogenannten PMD-Kameras oder anderen zur Entfernungsbestimmung fähigen Kameras und auch Infrarotkameras denkbar.

Vorzugsweise kann aus den Sensordaten als geographische Information wenigstens eine Ecke und/oder eine Kante eines statischen Objekts ermittelt werden. In den Bilddaten einer Bildaufnahmeeinrichtung sind neben der Häuserfront auch Fußgänger, Kraftfahrzeuge und der Gehsteig abgebildet. Die Erkennung statischer Objekte kann auf verschiedene Arten realisiert werden. Zum einen kann auf jedes aufgenommene Bild ein Objektidentifizierungsalgorithmus angewendet werden, da die aufzuspürenden statischen Objekte wie Häuser oder Gehsteige mehr oder weniger leicht identifizierbare Formen haben. Auf diese Art und Weise lassen sich Objekte aufgrund von Vorwissen aus den Bilddaten extrahieren. Alternativ können auch zwei Bilder, die die gleiche Umgebung des Kraftfahrzeugs zeigen und die mit kurzem zeitlichen Abstand aufgenommen wurden, miteinander verglichen werden. Bei bekannter Fahrzeugverschiebung kann die Objektverschiebung in den Bilddaten berechnet werden. Überschreitet die berechnete Verschiebung einen vorgegebenen Stellwert, liegt dies an einer Eigenbewegung des abgebildeten Objekts, dieses ist daher nicht statisch in dem Sinne, dass es ortsbeweglich ist.

Die ermittelte Ecke kann beispielsweise eine Gehsteigkante betreffen oder auch die Kante eines Hauses oder ein Fenster eines Hauses sein. Grundsätzlich ist jede Ecke oder Kante eines statischen Objekts, die sich von seiner Umgebung abhebt, zur Speicherung als zusätzliches geographisches Datum geeignet. Bei aneinandergereihten Häusern kann dies auch durch einen Farbwechsel der Hausfassade erkannt werden. Ein Datum bezeichnet hier wie in der Informatik üblich die Einzahl von "Daten". Zur Berechnung der geographischen Position der Ecke oder der Kante kann dabei auf die geographischen Basisdaten zurückgegriffen werden. Ist beispielsweise eine bestimmte Häuserkante bereits in den geographischen Basisdaten vorhanden, können die weiteren Häuserkanten, deren Abstände sich aus den Bilddaten ermitteln lassen, anhand der bekannten geographischen Position der vorbekannten Häuserkante berechnet werden. Genauso lassen sich Türkanten oder Fensterkanten aus bekannten Häuserkanten berechnen. Alternativ können die zusätzlichen geographischen Daten auch mit den mittels der Navigationseinrichtung bestimmten geographischen Positionsinformationen versehen werden, wenn diese hinreichend genau sind.

Erfindungsgemäß wird aus den Sensordaten als geographische Information wenigstens eine Information über ein dynamisches Objekt in Abhängigkeit einer Uhrzeit und/oder eines Datums ermittelt. Als dynamisches Objekt sind dabei Objekte anzusehen, die entweder per se ortsbeweglich sind. Andererseits werden darunter auch Objekte erfasst, deren Existenz im Vergleich zu den Aktualisierungszyklen von den geographischen Basisdaten eher gering ist. In die zuletzt genannte Kategorie fallen beispielsweise Baustellen und geparkte Kraftfahrzeuge. Zu den per se beweglichen Objekten gehören auf einer Straße befindliche Kraftfahrzeuge sowie Fußgänger.

Vorteilhafterweise kann aus wenigstens zwei Informationen über dynamische Objekte wenigstens eine Gefährdungs- und/oder Störstelle identifiziert werden. Der besondere Vorteil dieser Ausgestaltung zeigt sich bei der Bestimmung der Fahrroute durch die Navigationseinrichtung. Jeder Mensch fährt bestimmte Routen wiederholt ab, sei es, weil er von der Wohnung zum Arbeitsplatz fährt oder um Freunde und Bekannte zu besuchen. In Abhängigkeit der Uhrzeit und des Wochentags wird dabei das Verkehrsaufkommen eine bestimmte Größe erreichen. Ein erhöhtes Verkehrsaufkommen zu bestimmten Uhrzeiten an bestimmten Wochentagen auf bestimmten Strecken kann dabei durch Erkennung von vor, hinter oder neben dem Kraftfahrzeug befindlichen anderen Kraftfahrzeugen erfolgen. Andererseits können auch Menschenansammlungen in Abhängigkeit des Ortes, der Uhrzeit und des Wochentags bestimmt werden. Als besonders relevant sind hierbei die Umgebungen von Schulen nach Schulschluss zu nennen. Derartige Gefährdungs- oder Störstellen können normalerweise durch die Unternehmen, die zur Erfassung der geographischen Basisdaten verantwortlich sind, aufgrund des zu investierenden Personalaufwands nicht ermittelt werden. Dem Fahrer vor Ort sind sie aber wohl vertraut und auch das Kraftfahrzeug kann derartige Stellen aufgrund der Erfassung und Speicherung der zusätzlichen geographischen Daten sozusagen erlernen. Somit wird es möglich, dass die Navigationseinrichtung den Fahrer um derartige potentiell gefährliche Stellen herumführt. Selbstverständlich ist es beispielsweise nicht nötig, die Fahrroute sonntags von einer Schule zu beabstanden oder samstags abends einen Feierabendstau zu berücksichtigen, der nur von Montag bis Freitag auftritt. Daher ist es notwendig, zu den dynamischen Objekten die Uhrzeit und das Datum, hier im Sinne einer zeitbezogenen Größe und insbesondere in Form eines Wochentags, zu ermitteln und abzuspeichern. Im Gegensatz zu bereits erwähnten aktuellen Stauinformationen, die typischerweise lediglich über Autobahnen zur Verfügung stehen, können mit dem erfindungsgemäßen Verfahren gerade immer wieder auftretende Verkehrsstockungen in bestimmten Bereichen einer Stadt, sogar ohne deren konkrete Kenntnis, in die Bestimmung der Fahrroute einbezogen werden. Der Fahrer verfügt somit über eine selbstlernende Navigationseinrichtung, die auf seine speziellen individuellen Bedürfnisse angepasst wird. Praktischerweise erfolgt die Anpassung grundsätzlich erfindungsgemäß allein dadurch, dass der Fahrer die von ihm bevorzugten Fahrstrecken mehrmals befährt.

Mit besonderem Vorteil kann die durch die Navigationseinrichtung bestimmte Position des Kraftfahrzeugs in Abhängigkeit der zusätzlichen geographischen Daten und/oder der Sensordaten ermittelt werden. Dadurch lässt sich die Genauigkeit der Positionsbestimmung steigern. In den geographischen Basisdaten und/oder den zusätzlichen geographischen Daten liegen beispielsweise Grundrissinformationen und/oder Informationen über Häuserecken und -kanten bzw. dreidimensionale Hausmodelle und/oder Straßenkanten vor. Werden diese aus den Sensordaten ebenfalls extrahiert und mit den vorhandenen geographischen Daten abgeglichen, kann die Position des Kraftfahrzeugs genauer bestimmt werden als es mit einer herkömmlichen Bestimmung mit GPS möglich wäre. Die Verwendung der zusätzlichen geographischen Daten ist dementsprechend besonders in Gegenden vorteilhaft, in denen häufiger Bauveränderungen vorkommen, oder in Regionen, in denen die Datendichte der geographischen Basisdaten gering ist. Vorteilhafterweise können gegebenenfalls weitere zusätzliche geographische Daten von einer bezüglich des Kraftfahrzeugs externen Datenquelle auf das Kraftfahrzeug übertragen und/oder eigene zusätzliche geographische Daten vom Kraftfahrzeug auf eine externe Datenquelle übertragen werden. Beispielsweise ist es möglich, die Daten im Rahmen einer sowieso vorzunehmenden Hauptuntersuchung abzugleichen, um so die zusätzlichen geographischen Daten, die mittels einer Vielzahl von Kraftfahrzeugen erfasst wurden, an einer oder mehreren zentralen Stellen zu sammeln oder zu übertragen. Diese Daten, die in Autowerkstätten vor Ort eingesammelt wurden, können dann noch beispielsweise an die Kraftfahrzeughersteller oder die Unternehmen, die geographische Daten erfassen, weitergegeben werden. In besonders vorteilhafter Ausgestaltung können bei der Übertragung der zusätzlichen geographischen Daten von der externen Datenquelle auf das Kraftfahrzeug nur Daten bezogen auf den Fahrzeugstandort verwendet werden. Die ermittelten zusätzlichen geographischen Daten beanspruchen selbstverständlich ein gewisses Maß an Speicherkapazität. Jedoch wird sich eine in Nürnberg lebende Person mit einer gewissen Wahrscheinlichkeit häufiger in München oder Ingolstadt aufhalten als in einer beliebigen Stadt außerhalb von Bayern. Zur Begrenzung der zu übertragenden zusätzlichen geographischen Daten können daher auf ein Kraftfahrzeug mit Standort in Nürnberg nur zusätzliche geographische Daten aus der Stadt und dem Umland von Nürnberg, dem Bereich Nordbayern oder aus ganz Bayern übertragen werden. Diese Übertragung kann dann vollautomatisch vorgenommen werden. Es ist aber auch denkbar, die Datenübertragung dahingehend zu individualisieren, dass der Fahrer zusätzliche Wünsche äußern kann. Beispielsweise haben Vertreter Einsatzgebiete, die selten mit den Landesgrenzen der Bundesländer übereinstimmen. Es ist daher zur Steigerung der Kundenzufriedenheit vorzusehen, dass der Fahrer auch Zusatzwünsche hinsichtlich der zu übertragenden zusätzlichen geographischen Daten äußern kann.

Daneben betrifft die Erfindung auch ein Kraftfahrzeug umfassend eine Navigationseinrichtung, eine Steuerungseinrichtung, eine Speichereinrichtung und eine Sensoreinrichtung zur Durchführung des beschriebenen Verfahrens.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: ein erfindungsgemäßes Kraftfahrzeug,
- Fig. 2: ein Bild mit geographischen Basisdaten und zusätzlichen geographischen Daten,
- Fig. 3: ein Bild mit dynamischen Objekten,
- Fig. 4: ein Bild mit dynamischen Objekten in einer zweiten Ausgestaltung, und
- Fig. 5: den Datenaustausch zwischen einem Kraftfahrzeug und einer externen Datenquelle.

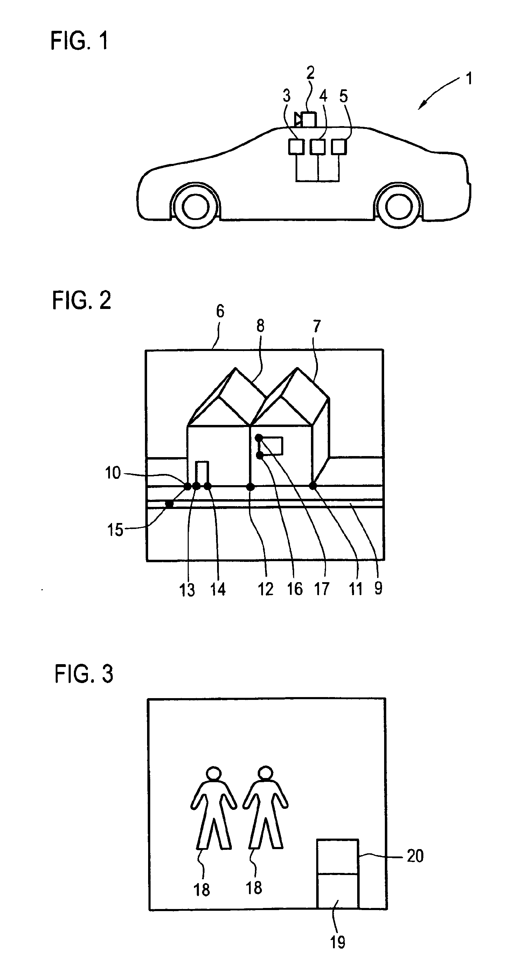

Fig. 1 zeigt ein Kraftfahrzeug 1 mit einer Kamera 2, einer Navigationseinrichtung 3, einer Steuerungseinrichtung 4 und einer Speichereinrichtung 5. Sämtliche Einrichtungen des Kraftfahrzeugs 1 sind selbstverständlich zur Kommunikation miteinander verbunden. Die Kamera 2 nimmt Bilddaten der Umgebung des Kraftfahrzeugs 1 auf und übergibt diese an die Steuerungseinrichtung 4. Die Steuerungseinrichtung 4 weist entsprechende Programmmittel auf, um aus den Bilddaten der Kamera 2 statische und dynamische Objekte zu extrahieren, um diese Informationen gegebenenfalls mit Datum und Uhrzeit versehen als zusätzliche geographische Daten in der Speichereinrichtung 5 abzuspeichern. Eine nähere Beschreibung der geographischen Daten findet sich im Folgenden.

Fig. 2 zeigt ein Bild 6, das mit der Kamera 2 aufgenommen wurde. In diesem sind zwei Häuser 7 und 8 sowie die Gehsteigkante 9 abgebildet. Die Bildpunkte 10, 11 und 12 sind als geographisches Basisdatum bereits kraftfahrzeugseitig bekannt, das heißt, sie liegen der Navigationseinrichtung 3 zur Positionsbestimmung und Routenberechnung vor. Zur Ergänzung der geographischen Basisdaten bestimmt die Steuerungseinrichtung 4 in Bild 6 zusätzlich die zusätzlichen geographischen Daten 13, 14, 15, 16 und 17, durch die der Detailgrad der Ortsinformation steigt. Insbesondere in schwächer besiedelten Gebieten liegen aber nicht einmal die geographischen Basisdaten 10, 11 und 12 als Informationen über die Häuserecken vor, weshalb in derartigen Gebieten bereits grundlegende Informationen über statische Objekte als zusätzliche geographische Daten gewonnen werden müssen. Mit Hilfe dieser zusätzlichen geographischen Daten wird die Positionsbestimmung durch die Navigationseinrichtung 3 verbessert, indem in neu aufgenommenen Bilddaten Gebäudeecken ermittelt und mit den Modellecken aus den zusätzlichen geographischen Daten abgeglichen werden. Die Positionsbestimmung, die allein mittels GPS lediglich bei 3 - 20 m genau liegt, kann so zumindest auf wenige Dutzend Zentimeter erhöht werden.

Fig. 3 zeigt zwei Fußgänger 18, die im Bild 6 der Kamera 2 abgebildet sind, wobei zusätzlich das Datum 19 und die Uhrzeit 20 erfasst wurden. Anhand des Datums 19 liegt gleichzeitig der Wochentag, an dem das Bild 6 aufgenommen wurde, fest.

Wenn an bestimmten Orten zu bestimmten Uhrzeiten an bestimmten Wochentagen immer wieder größere Mengen an Fußgängern 18 ermittelt werden, ist es aus Sicherheitsgründen vorgesehen, dass die Navigationseinrichtung 3 diese Menschenansammlungen in der Bestimmung der Fahrroute berücksichtigt. Insbesondere können dadurch Schulen bei Unterrichtsende in weiterem Abstand umfahren werden, um so eine Gefährdung eventuell unvorsichtiger Schüler zu verhindern.

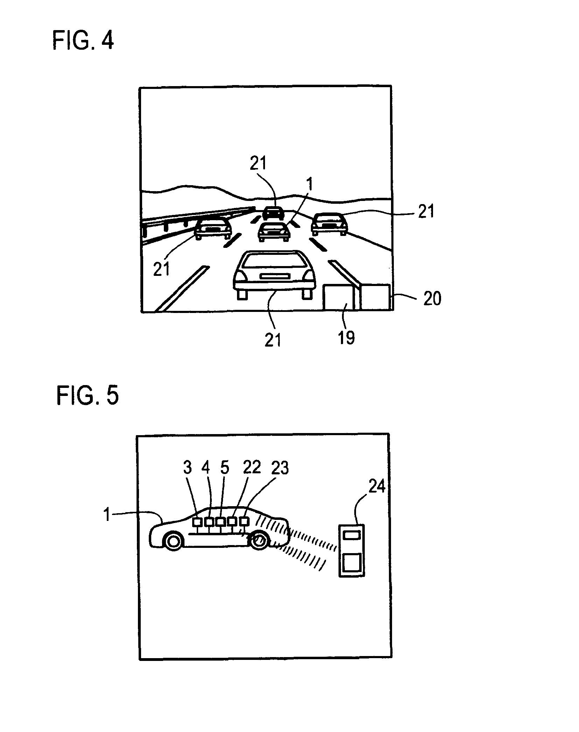

Neben Fußgängern 18 können auch Kraftfahrzeuge 21, die sich vor, hinter oder neben dem Kraftfahrzeug 1 befinden, als dynamische Objekte erfasst werden, wie Fig. 4 zeigt. Die Erfassung der Kraftfahrzeuge 21 ist zur Stauvoraussage hilfreich. Zusätzlich zur Erfassung der Kraftfahrzeuge 21 ist dabei auch die Eigengeschwindigkeit des Kraftfahrzeugs 1 zu berücksichtigen. Anhand dieser Informationen kann die Navigationseinrichtung 3 ermitteln, ob das Befahren bestimmter Strecken zu bestimmten Uhrzeiten unter Inkaufnahme eines Umwegs zu vermeiden ist, oder ob ein langsameres Vorankommen auf der kürzest möglichen Route die optimale Alternative darstellt. Zusätzlich kann aber auch eine Fahrroute mit sehr hohem Verkehrsaufkommen grundsätzlich vermieden werden, da in derartigen Situationen die Unfallgefahr steigt.

Da jeder Fahrer bestimmte Strecken wiederholt fährt, kann er alleine durch sein gewohntes Fahrverhalten eine auf ihn zugeschnittene und optimierte Ansammlung an zusätzlichen geographischen Daten 13 - 17 erlangen. Anhand dieser individuellen zusätzlichen geographischen Daten 13 - 17 können dann individuell optimierte Fahrrouten durch die Navigationseinrichtung 3 ermittelt werden.

Allerdings sind den meisten Fällen die zusätzlichen geographischen Daten 13 - 17 nicht nur für den Fahrer des Kraftfahrzeugs 1 interessant, sondern auch für die Fahrer von Kraftfahrzeugen, die auf den gleichen Strecken wie das Kraftfahrzeug 1 unterwegs sind, diese Strecken aber seltener befahren und diesbezüglich daher weniger zusätzliche geographische Daten 13 - 17 aufweisen. Daher ist vorgesehen, dass z. B. im Rahmen von ohnehin vorkommenden Werkstattbesuchen die zusätzlichen geographischen Daten 13 - 17 des Kraftfahrzeugs 1 mit einer zentralen Stelle in Form der Recheneinrichtung 24 synchronisiert werden, siehe Fig. 5. Hierzu weist das Kraftfahrzeug 1 eine Sendeeinrichtung 22 und eine Empfangseinrichtung 23 auf. Während vom Kraftfahrzeug 1 alle in der Speichereinrichtung 5 vorhandenen zusätzlichen geographischen Daten 13 - 17 auf die Recheneinrichtung 24, die sich in einer Autowerkstatt befindet, übertragen werden, werden von der Recheneinrichtung 24 nur auf den Kraftfahrzeugstandort bezogene zusätzliche geographische Daten 13 - 17 zurückübertragen. Dadurch kommt die Speichereinrichtung 5 des Kraftfahrzeugs 1 mit angemessenen Kapazitäten aus, wodurch eine Kostenreduzierung erreicht werden kann.

## Patentansprüche

1. Verfahren zum Betrieb einer Navigationseinrichtung (3) eines Kraftfahrzeugs (1), wobei die Navigationseinrichtung (3) die Position und/oder die Fahrroute des Kraftfahrzeugs (1) mit Hilfe von kraftfahrzeugseitig vorhandenen geographischen Basisdaten (10, 11, 12) bestimmt, wobei aus den Sensordaten wenigstens einer kraftfahrzeugseitig vorhandenen Sensoreinrichtung (2) wenigstens eine geographische Information zu einem Bereich der Kraftfahrzeugumgebung ermittelt, in einer Speichereinrichtung (5) als zusätzliches geographisches Datum (13, 14, 15, 16, 17) gespeichert und zur Ergänzung und/oder Aktualisierung der geographischen Basisdaten (10, 11, 12) verwendet wird,
**dadurch gekennzeichnet,**
**dass** aus den Sensordaten als geographische Information wenigstens eine Information über ein dynamisches Objekt (7, 8, 9) in Abhängigkeit einer Uhrzeit (20) und/oder eines Datums (19) ermittelt wird.

2. Verfahren nach Anspruch 1,
**dadurch gekennzeichnet,**
**dass** als Sensoreinrichtung (2) eine Bildaufnahmeeinrichtung zur Aufnahme von Bilddaten als Sensordaten verwendet wird.

3. Verfahren nach Anspruch 1 oder 2,
**dadurch gekennzeichnet,**
**dass** aus wenigstens zwei Informationen über dynamische Objekte wenigstens eine Gefährdungs- und/oder Störstelle identifiziert wird.

4. Verfahren nach einem der vorangehenden Ansprüche,
**dadurch gekennzeichnet,**
**dass** die durch die Navigationseinrichtung (3) bestimmte Fahrroute in Abhängigkeit der zusätzlichen geographischen Daten ermittelt wird.

5. Verfahren nach einem der vorangehenden Ansprüche,
**dadurch gekennzeichnet,**
**dass** gegebenenfalls weitere zusätzliche geographische Daten von einer bezüglich des Kraftfahrzeugs (1) externen Datenquelle auf das Kraftfahrzeug (1) übertragen und/oder eigene zusätzliche geographische Daten vom Kraftfahrzeug (1) auf eine externe Datenquelle übertragen werden.

6. Verfahren nach Anspruch 5,
**dadurch gekennzeichnet,**
**dass** bei der Übertragung der zusätzlichen geographischen Daten von der externen Datenquelle auf das Kraftfahrzeug (1) nur Daten bezogen auf den Fahrzeugstandort verwendet werden.

7. Kraftfahrzeug (1) umfassend eine Navigationseinrichtung (3), eine Steuerungseinrichtung (4), eine Speichereinrichtung (5) und eine Sensoreinrichtung (2) zur Durchführung des Verfahrens nach einem der vorangehenden Ansprüche.

## Claims

1. Method for operating a navigation device (3) of a motor vehicle (1), the navigation device (3) setting the position and/or the route of the motor vehicle (1) by means of geographical basic data (10, 11, 12) which are internal to the motor vehicle, at least one item of geographical information regarding a region of the vehicle surroundings being determined from the sensor data from at least one sensor device (2) which is internal to the motor vehicle, said item of information being stored in a storage device (5) as an additional item of geographical data (13, 14, 15, 16, 17) and being used for supplementing and/or updating the geographical basic data (10, 11, 12), **characterised in that** at least one item of information regarding a dynamic object (7, 8, 9) is determined, depending on time (20) and/or an item of data (19), from the sensor data as geographical information.

2. Method according to claim 1, **characterised in that** an image recording device is used as a sensor device (2) for recording image data as sensor data.

3. Method according to either claim 1 or claim 2, **characterised in that** at least one point of danger and/or point of disturbance is identified from at least two items of information regarding dynamic objects.

4. Method according to any of the preceding claims, **characterised in that** the route set by the navigation device (3) is determined depending on the additional geographical data.

5. Method according to any of the preceding claims, **characterised in that**, optionally, further additional geographical data are transferred to the motor vehicle (1) from a data source external to the motor vehicle (1) and/or some additional geographical data are transferred to an external data source from the motor vehicle (1).

6. Method according to claim 5, **characterised in that**, when transferring the additional geographical data to the motor vehicle (1) from the external data source, only data relating to the location of the vehicle are used.

7. Motor vehicle (1) comprising a navigation device (3), a control device (4), a storage device (5) and a sensor device (2) for performing the method according to any of the preceding claims.

## Revendications

1. Procédé de fonctionnement d'un dispositif de navigation (3) d'un véhicule automobile (1), dans lequel le dispositif de navigation (3) détermine la position et/ou la route de déplacement du véhicule automobile (1) à l'aide de données de base géographiques (10, 11, 12) disponibles côté véhicule automobile, dans lequel, à partir des données d'au moins un dispositif capteur (2) disponible côté véhicule automobile, au moins une information géographique est déterminée sur une zone de l'environnement du véhicule automobile, est enregistrée dans un dispositif à mémoire (5) comme donnée géographique supplémentaire (13, 14, 15, 16, 17) et est utilisée pour parachever et/ou actualiser les données de base géographiques (10, 11, 12),
**caractérisé en ce que**,
à partir des données du capteur, on détermine comme information géographique au moins une information sur un objet dynamique (7, 8, 9) en fonction d'une heure (20) et/ou d'une date (19).

2. Procédé selon la revendication 1,
**caractérisé en ce que**,
comme dispositif capteur (2), on utilise un dispositif
de prise de vues pour prendre des données d'images comme données de capteur.

3. Procédé selon la revendication 1 ou la
revendication 2,
**caractérisé en ce que**,
à partir d'au moins deux informations sur des objets
dynamiques, on identifie au moins un point de risque et/ou de défaillance.

4. Procédé selon l'une quelconque des revendications
précédentes,
**caractérisé en ce que**
la route de déplacement déterminée par le dispositif
de navigation (3) est déterminée en fonction des données géographiques supplémentaires.

5. Procédé selon l'une quelconque des revendications
précédentes,
**caractérisé en ce que**
éventuellement d'autres données géographiques
supplémentaires sont transférées au véhicule automobile (1) d'une source de données externe par rapport au véhicule automobile (1) et/ou des données géographiques supplémentaires propres sont transférées du véhicule automobile (1) à une source de données externe.

6. Procédé selon la revendication 5,
**caractérisé en ce que**,
lors du transfert des données géographiques
supplémentaires de la source de données externe au véhicule automobile (1), seules sont utilisées des données se rapportant à la position du véhicule.

7. Véhicule automobile (1) comprenant un dispositif de navigation (3), un dispositif de commande (4), un dispositif de mémoire (5) et un dispositif capteur (2) pour réaliser le procédé selon l'une quelconque des revendications précédentes.
